# EUROPEAN PATENT SPECIFICATION

(11) **EP 4 351 104 B1**
(45) Date of publication and mention of the grant of the patent: **04.02.2026**
(21) Application number: 22382950.8
(22) Date of filing: 07.10.2022
(51) Int. Cl.: H04L 65/1096, H04L 65/1069, H04L 65/1104, H04M 3/42, H04M 3/46, H04M 3/54

(54) **TELECOMMUNICATIONS NETWORK ENTITY AND METHOD**
TELEKOMMUNIKATIONSNETZWERKEINHEIT UND VERFAHREN
ENTITÉ DE RÉSEAU DE TÉLÉCOMMUNICATIONS ET PROCÉDÉ

(43) Date of publication of application: 10.04.2024
(73) Proprietor: Vodafone Group Services Limited, Newbury, Berkshire RG14 2FN (GB)
(72) Inventor: DOMINGUEZ, Rafael, London, W2 6BY (GB); MARTINEZ, Rogelio, London, W2 6BY (GB); MANSO, Raquel, London, W2 6BY (GB)
(74) Representative: Boult Wade Tennant LLP

(56) References cited:
- EP-A1- 2 150 016
- WO-A1-2013/182256
- US-B1- 8 345 669
- US-B2- 7 301 913

## Description

### Field

The present disclosure concerns network entities for use in telecommunications networks and methods performed by such network entities.

### Background

The Session Initiation Protocol (SIP) is a signalling protocol used for initiating, maintaining, and ending communication sessions that include voice, video and messaging applications. SIP may be used in mobile phone calling over LTE (VoLTE). SIP defines the specific format of messages exchanged and the sequence of communications for cooperation of the participants. SIP is a text-based protocol, incorporating many elements of the Hypertext Transfer Protocol (HTTP) and the Simple Mail Transfer Protocol (SMTP). A call established with SIP may comprise multiple media streams.

SIP typically works in conjunction with several other protocols that specify and carry the session media. Most commonly, media type and parameter negotiation and media setup are performed with the Session Description Protocol (SDP), which is carried as payload in SIP messages. For the transmission of media streams (voice, video), the SDP payload carried in SIP messages typically employs the Real-time Transport Protocol (RTP) or the Secure Real-time Transport Protocol (SRTP).

The Session Description Protocol (SDP) is a format for describing multimedia communication sessions for the purposes of announcement and invitation. It is typically used in support of streaming media applications, such as voice over IP (VoIP) and video conferencing. SDP does not deliver any media streams itself but is used between endpoints for negotiation of network metrics, media types, and other associated properties. The set of properties and parameters is called a session profile. SDP is extensible for the support of new media types and formats.

In the context of the present disclosure, the following acronyms are used:
- SBC: Session Border Controller.
- CSCF: Call Session Control Function.
- MGCF: Media Gateway Control Function
- AS: Application Server (a back-to-back user agent)

With the uptake of VoLTE deployment around the world, telecommunications companies are facing the lack of a tight standard way of dealing with SIP endpoints, which are often not globally compatible. Heterogeneous implementations can hinder network rationalisation and optimization.

Additionally, with new and increasingly complicated services, new issues are arising due to the complicated topologies that are used. Some of these topologies cause long term problems in SIP networks to resurface. One such problem is the problem when performing third party call control with calls with unrelated media. This situation is a common occurrence when capturing a call (e.g. using a call pickup service) or performing a call transfer.

Firstly, the standard relating to "An Offer/Answer Model Session Description Protocol" (RFC 3264; https://tools.ietf.org/html/rfc3264#section-8.3.2; accessed 17 August 2022) states:
"However, in the case of RTP, the mapping from a particular dynamic payload type number to a particular codec within that media stream MUST NOT change for the duration of a session. For example, if A generates an offer with G.711 assigned to dynamic payload type number 46, payload type number 46 MUST refer to G.711 from that point forward in any offers or answers for that media stream within the session. For example, if A generates an offer with G.711 assigned to dynamic payload type number 46, payload type number 46 MUST refer to G.711 from that point forward in any offers or answers for that media stream within the session. However, it is acceptable for multiple payload type numbers to be mapped to the same codec, so that an updated offer could also use payload type number 72 for G.711."

Media from different handsets tend to have overlapping rtpmaps, and nothing guarantees that two different calls will have compatible rtpmaps. This may create problems in complex scenarios that need to mix audio from the two calls. One example where this is required is in a call pickup feature, where one phone can retrieve a call directed to or originated from any of the endpoints of that phone's group. Another example that can also potentially be affected by this issue is call transfer functionality.

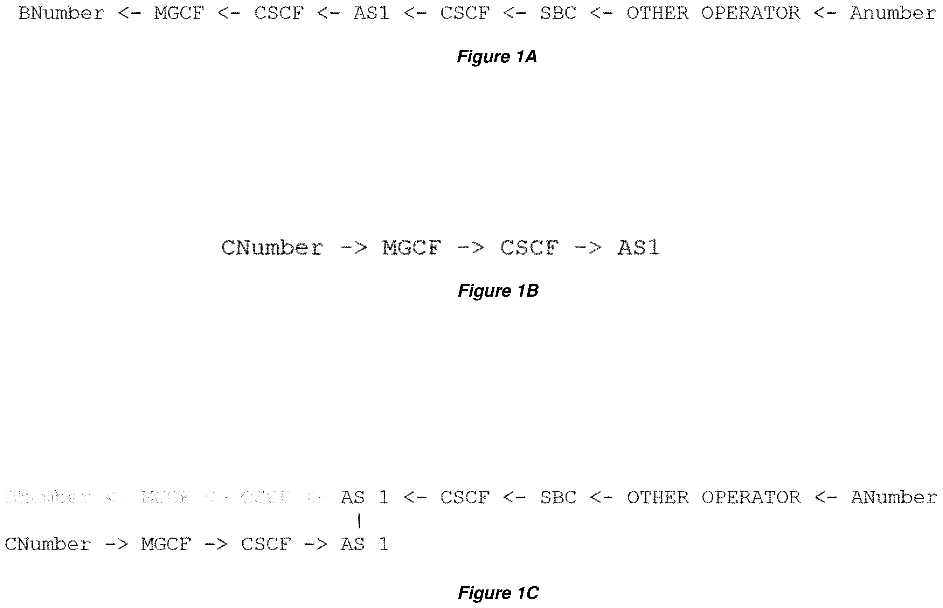

An exemplary scenario is a call from A to B (in a call pick up group that goes directly to Mobile phone B). Such a scenario is shown in Figure 1A, which shows the flow of communications from the ANumber to the OTHER OPERATOR, SBC, CSCF, AS1, CSCF, MGCF and BNumber.

Such a call may be temporarily established with the following parameters:

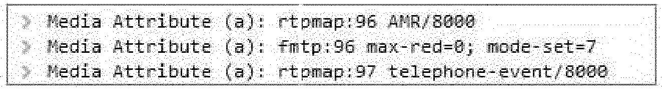

A CALL from Mobile C calling the service to capture the previous call instead of Mobile B is shown in Figure 1B, which shows the flow of communications from the CNumber to the MGCF, CSCF and AS1. When CNumber attempts to join the communication session, for example as part of third party call control, CNumber offers the following to AS 1:

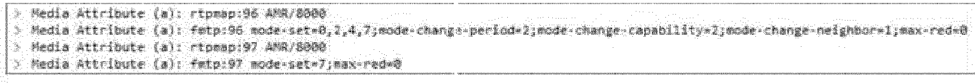

This is the offer is that the AS sends to OTHER OPERATOR to merge the two legs of the call, as shown in Figure 1C.

OTHER OPERATOR answers with the following, which eventually reaches the MGCF:

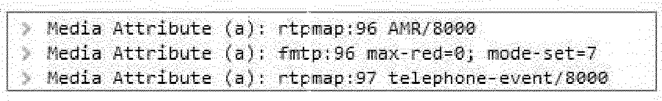

This sequence of events presents a problem, because the rtpmap+fmtp pair has been already set with a different codec configuration, and the call is likely to go silent. A variety of different things can happen at this point:
- RTP 96 can be allocated differently: AMR-NB on one side and AMR-WB on the other. Both phones will be using different codecs while thinking they are being consistent.
- RTP97 can be mapped on one end to telephone event, and a codec on the other side, making the communication not possible.

With the increase of VoLTE / SIP interconnection and the increasing lack of control of the configurations of the endpoints, such issues are likely to happen with increasing frequency. It is an object of the present disclosure to address these and other problems with SIP systems.

International Patent Publication No. WO2013/182256 describes a method of operating an IP Multimedia Subsystem Access Gateway (IMS-AGW) in order to support the transmission of media to and from an endpoint, using an IMS, wherein the endpoint implements an alternative media transport protocol other than Real-time Transport Protocol (RTP). The method comprises the IMS-AGW receiving instructions from an IMS Application Level Gateway (IMS-ALG) for an alternative media transport protocol connection with the endpoint and a RTP connection within the IMS, the instructions including more than one RTP payload type number and a dynamic binding of each of the more than one RTP payload type number to a statically defined codec identifier. The IMS-AGW stores the dynamic binding. Then, when translating between alternative media transport protocol packets and RTP packets, the IMS-AGW uses the stored binding to map between an RTP payload type number and a codec identifier used by the alternative media transport protocol.

European Patent Publication No. EP 2,150,016 describes a method of a call based on media attributes off the can in a telecommunications network. The call forwarding services includes call forwarding based on SDP attributes, media-based partial call forwarding and partial call forwarding to multiple destinations. The method comprises comparing parameters of SDP with can forwarding parameter of the user, obtaining a match between one of the SDP parameters and the call forwarding parameters, sending a REFER message in case of partial call forwarding, multiple REFER messages in case of partial call forwarding to multiple destinations to network of calling user, and forwarding the call to other terminals as specified in the call forwarding parameters.

US Patent No. US 7,301,913 describes a SIP and SDP protocol to modify SDP descriptions included in SIP messages to facilitate transcoding. After receiving an INVITE message from a calling party, the SIP proxy negotiates with a transcoder for getting a list of codecs of the transcoder and their address information. The SIP proxy adds the codec list of the transcoder to the received SDP description in the invite message, and sends this way modified SDP description in an INVITE message to a called party. After receiving the modified SDP, the called party selects codecs or a list of suitable codecs according to preferences in the modified SDP and its own preferences.

US8345669 B1 discloses a call establishment between a calling device and a answering device being part of a call group, the answering device not being the original called device in which the SIP signalling is handled by a serving entity between the calling party and the other parties of the call pickup group.

### Summary

Building on this background and in accordance with a first aspect, there is provided a method according to claim 1.

The present disclosure relates to methods for controlling communication sessions involving multiple devices that use unrelated media formats (e.g. codecs). Such communication sessions can be encountered in, for example, third party call control scenarios. Preferred embodiments offer a standard solution to this issue that can conveniently can be deployed on a SIP application server. The SIP application server is the preferred location for the solution because the rest of the core network elements typically only see two unrelated calls. Nevertheless, the solution can be implemented elsewhere, such as in back-to-back elements such as session border controllers (SBCs).

Embodiments of the disclosure seek to improve the way in which communication sessions are established, by modifying payload identifiers of signalling messages to ensure that such identifiers are used consistently for the duration of a communication session. In particular, a method performed by a network entity of a telecommunications network is provided. The method comprises: receiving a first session initiation protocol, SIP, message originating from the calling device and addressed to the first called device, the first SIP message comprising a first set of one or more payload identifiers; receiving a second SIP message originating from the second called device and addressed to the calling device, the second SIP message comprising a second set of one or more payload identifiers; and sending, to the calling device, a third SIP message, the third SIP message comprising a third set of one or more payload identifiers. The third set of one or more payload identifiers may be different to and/or independent of at least one of the first set of one or more payload identifiers and the second set of one or more payload identifiers. This may lead to a thirds set that is entirely different to the first and/or second sets, or a third set that is partially different to the first and/or second sets. The payload identifiers of the third set may be determined entirely independently of the payload identifiers in the first and/or second sets and the network entity may store a mapping between the different sets and re-direct SIP messages according to this mapping. This can improve reliability by ensuring that payload identifier types remain unchanged throughout a session.

The methods described herein can facilitate any one or more of: third party call control; call pickup; and/or a call transfer. Any scenario with third party call control may be susceptible to the issues described herein, especially when the call media is negotiated independently. Thus, embodiments of the disclosure may send the third SIP message in response to identifying that the first called device and the second called device are in a call pickup group and/or a call forwarding group. Since the network entity may be responsible for executing a call pickup or call forwarding service (e.g. because the network entity may be an AS), it will be possible for the network entity to determine easily that the first called device and the second called device are in a call pickup group and/or a call forwarding group. Thus, when the network entity detects a SIP message between devices that could be subject to the issues described herein (e.g. because they are in a call pickup/forwarding group), then the network entity may decide to store certain data (e.g. payload identifiers in SIP messages) for a certain period of time (or indefinitely). The network entity may decide whether it needs to store the data or not and it may store all data, or only for a number of cases, for example, provisioning data.

Preferred embodiments relate to payload identifiers that may be stored in a session description protocol, SDP, message associated with a respective SIP message. The solution of the present disclosure can reduce issues caused by changing the way in which dynamic ranges in SDP messages are used when performing third party call control. At least one, and optionally a plurality or each set of one or more payload identifiers described in the present disclosure may comprise one or more rtpmap attributes and/or or more fmtp attributes. At least one set of one or more payload identifiers, and optionally a plurality of or each set of one or more payload identifiers, may comprise a plurality of payload identifiers (i.e. there may be a plurality of payload identifiers in any given set).

Embodiments of the disclosure are particularly advantageous when dynamic payload identifier types are used. Thus, at least one, and optionally a plurality or each, set of one or more payload identifiers may be a dynamic payload identifier.

The SIP messages described herein may be used for establishing communication sessions between a calling device, and a first called device, and a second called device. That is, the methods of the present disclosure may comprise steps of establishing one or more communication sessions based on the SIP messages that are described herein. The first SIP messages described herein may be for establishing a communication session between the calling device and the first called device, the second SIP messages described herein may be for establishing a communication session between the calling device and the second called device, and/or the third SIP messages described herein may be for establishing a communication session between the calling device and the second called device.

In embodiments of the present disclosure, the methods may comprise establishing a communication session between the calling device and the second called device, even though the calling device did not intend to communicate with the second called device. Thus, the communications with the second called device may occur instead of or in addition to establishing a communication session between the calling device and the first called device.

### Listing of Figures

The present disclosure will now be described by way of example, with reference to the accompanying figures, in which:
Figure 1 shows a network architecture in which embodiments of the disclosure may be implemented;
Figure 2 shows a first method according to an embodiment of the disclosure;
Figure 3 shows a second method according to an embodiment of the disclosure; and
Figure 4 shows the methods of Figures 3 and 4 in combination.

### Detailed Description

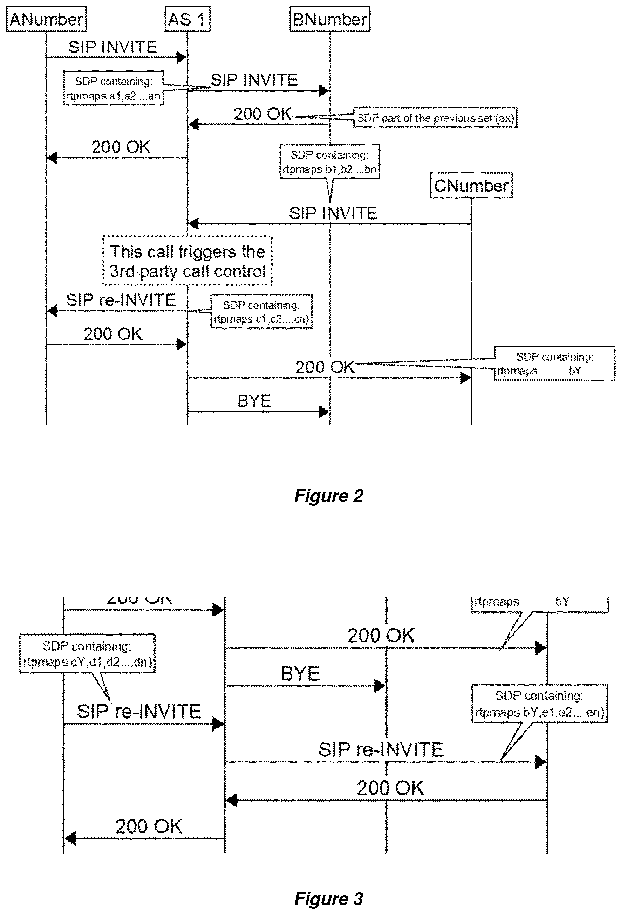

Figure 2 depicts a simplified diagram of embodiments of the present disclosure. In Figure 2, provisional responses and acknowledgements are omitted to enhance readability. Figure 2 shows a method for addressing the above-noted problems associated with the flow shown in Figure 1. In Figure 2, a method performed by a network entity, such as an AS or an SBC, of a telecommunications network is shown.

The solution starts when it detects an incoming SIP message, such as a SIP INVITE, that is subject to the issues described previously. For example, the solution may start when a network entity receives a SIP INVITE from a calling device and to a called device, which the network entity knows may be in a call forwarding group or a call pickup group. The SIP INVITE may be described in general terms as a first SIP message originating from the calling device (ANumber) and addressed to the called device (BNumber).

The Application Server (AS) may store, associated with the ANumber, the list of rtpmaps used in the INVITE. This list may be termed a1, a2 ... aN or, more generally, a set of one or more payload identifiers. The call progresses normally to the B party until it is accepted. In particular, a SIP message (which in this example is a SIP OK message, but which could be various other types of message) is sent by the BNumber and the SDP sent with this message will be a part of the previous set a1, a2 ... aN.

When the service is triggered by a second called device (Cnumber), the second called device will send a SIP message with a set of one or more payload identifiers, which are an SDP having an unrelated set of rtpmaps: b1, b2, ... bN. At this point, the server could compare the list of rtpmaps and associated codecs, but that is increasingly difficult and will require configuration for every codec, as fmtp modifiers can make the same codec not compatible end-to-end.

Instead, in embodiments of this disclosure, the AS modifies the payload identifiers (i.e. the SDP) that are sent to the Anumber as part of the third party call control. The AS changes the b rtmaps for new ones: c1, c2, ... cN. These new rtpmaps are chosen such that:
c ∉ {a1,a2,..aN,b1,b2,...bN}; and/or
c ∉ {a1,a2,..aN}.

Thus, in a general sense, the solution receives a second SIP message (e.g. a SIP INVITE) originating from a second called device (Cnumber) and addressed to the calling device (Anumber), which comprises a second set of one or more payload identifiers. The solution then sends, to the calling device, a third SIP message (e.g. a SIP re-INVITE) that comprises a third set (e.g. the set c) of one or more payload identifiers. The third set of one or more payload identifiers may be unrelated to (e.g. independent of, or different to) at least one of the first set (a) of one or more payload identifiers and the second set (b) of one or more payload identifiers. Preferably, the third set of one or more payload identifiers does not comprise any payload identifier from the first set of payload identifiers and/or the second set of payload identifiers. For instance, there may be no element in the third of payload identifiers that is a member of the first and/or the second sets of payload identifiers. In this way, it can be ensured that payload identifiers that need to remain constant throughout a session are not changed, which can in turn improve reliability.

In order to determine the third set of payload identifiers, the methods described herein may involve a step of storing the first set of one or more payload identifiers (e.g. in memory) after receiving the first SIP message. Then, when a second SIP message is receive, the method may comprise analysing the first and/or second sets of one or more payload identifiers after receiving the second SIP message, and determining the third set of one or more payload identifiers based on the analysis of the first and/or second sets of one or more payload identifiers. This process can be used to ensure that overlapping payload identifiers are not used. The payload identifiers in the third set are preferably within the dynamic range specified by the norms and specifications (e.g. in the dynamic rtpmap range), but other than, the third set of payload identifiers can take any values that are different to or at least independent of those values in the first (a) and second (b) sets.

The methods described herein may involve determining the third set of one or more payload identifiers by modifying the second set of one or more payload identifiers of the second SIP message. That is, a mapping between the different sets may be determined, with the third set of payload identifiers effectively acting as a translation of the second set. The decision to modify the payload identifiers may be made prior to sending the third SIP message (e.g. the SIP RE-INVITE sent to aNumber in Figure 2).

The new rtpmaps should preferably be stored until the INVITE transaction is completed. In general terms, therefore, the methods of the present disclosure may comprise storing the third set of one or more payload identifiers until a SIP transaction (such as the SIP INVITE transaction) is complete.

After the SIP re-INVITE message containing c1, c2, ... cn is sent to the aNumber, the aNumber will reply. In Figure 2, this reply is shown as a 200 OK message. The OK message will indicate a selection from the set c1, c2, ... cn. Hence, in general terms, the AS may receive a fourth SIP message (e.g. a SIP answer message, such as a SIP OK message, which could be a response to the third SIP message), the fourth SIP message originating from the calling device (ANumber) and addressed to the second called device (CNumber) and comprising a fourth set (e.g. a proper subset of the third set) of one or more payload identifiers.

When the AS receives the SDP response from ANumber, it should map the received c to its original b rtpmap. For this explanation, the received c and its original b are termed cY and bY, where bY (which is from the set b1, b2, ... bN) is the equivalent of the cY selected by the ANumber. Thus, the method may comprise determining a fifth set (e.g. the bY equivalent to the selected cY) of one or more payload identifiers based on: the fourth set of one or more payload identifiers; and the mapping between the second and third sets of one or more payload identifiers. Then, a response may be sent to the second called device, which may be a fifth SIP message (which may also be a SIP OK message, for example), the fifth SIP message comprising the fifth set of one or more payload identifiers.

This last step of mapping the received c to its original b rtpmap should be optional, however, because the RFC marks this as a desirable behaviour, but not mandatory. The response SHOULD convey the same rtpmap that was originally used. However, in the real world, it is not possible to control all devices, and some may choose not to enforce this specific feature.

Thus, the methods of the present disclosure may comprise determining a mapping between the second and third sets of one or more payload identifiers and storing the mapping between the second and third sets of one or more payload identifiers. The mapping may be stored for a time interval and optionally deleted after expiry of the time interval, and the time interval may be configurable (e.g. configurable by a user to permit adjustment).

As a general rule, the embodiments of the disclosure are most useful for payload identifiers within the dynamic ranges. For the static ones (such as PCMA-rtpmap 8 and g.722-rtpmap 9), any SDP will keep the rtpmap in a compatible format, and this solution need not be used because there will be no problem to begin with. However, these codecs MUST be maintained if present, as they provide the bottom line compatibility that can prove useful at later stages of the methods described herein. Thus, in a general sense, in the methods disclosed herein, sending the third SIP message may be performed in response to identifying that the first and/or second set of one or more payload identifiers indicates a dynamic payload type. This can be determined by inspecting the contents of the relevant messages. In particular, dynamic payload rtpmaps are well-defined and so the step of identifying may simply involve determining that the payload type identifier is within the dynamic rtpmap range.

At this point, the call has been successfully established, but a new re-INVITE or UPDATE from any of the parties can use the previously communicated codecs {a1, a2, ... aN, b1, b2, ... bN}. The AS cannot use these identifiers anymore without risking the good behaviour of the solution. In principle, this should not happen because the non-used rtpmap in the last SDP exchange SHOULD be freed to be used just as new, as per the RFC 3264. However, this requirement is not set in stone, and the time trigger cannot be enforced on endpoints:
"When an agent ceases using a media format (by not listing that format in an offer or answer, even though it was in a previous SDP) the agent will still need to be prepared to receive media with that format for a brief time. How does it know when it can be prepared to stop receiving with that format? If it needs to know, there are three techniques that can be applied. First, the agent can change ports in addition to changing formats. When media arrives on the new port, it knows that the peer has ceased sending with the old format, and it can cease being prepared to receive with it. This approach has the benefit of being media format independent. However, changes in ports may require changes in resource reservation or rekeying of security protocols. The second approach is to use a totally new set of dynamic payload types for all codecs when one is discarded. When media is received with one of the new payload types, the agent knows that the peer has ceased sending with the old format. This approach doesn't affect reservations or security contexts, but it is RTP specific and wasteful of a very small payload type space. A third approach is to use a timer. When the SDP from the peer is received, the timer is set. When it fires, the agent can cease being prepared to receive with the old format. A value of one minute would typically be more than sufficient. In some cases, an agent may not care, and thus continually be prepared to receive with the old formats. Nothing need be done in this case."

Given these restrictions, a configurable timer to delete the a, b and c rtpmap associations could be set and could continue transparently when the timer fires. However, it is not guaranteed that the terminals will respond according to the above paragraph, because it contains mainly recommendations.

An embodiment that addresses this problem is shown in Figure 3. The network entity may receive a sixth SIP message (e.g. the uppermost SIP re-INVITE in Figure 3) from the calling device, the sixth SIP message originating from the calling device and addressed to the second called device and comprising a sixth set (e.g. cY, d1, d2, ..., dn) of one or more payload identifiers. Then, the method may involve determining a seventh set of one or more payload identifiers based on: the sixth set of one or more payload identifiers; and the mapping between the second and third sets of one or more payload identifiers. Then, the method may comprise sending, to the second called device, a seventh SIP message (e.g. the lowermost SIP re-INVITE in Figure 3), the seventh SIP message comprising the seventh set of one or more payload identifiers. For instance, the SIP re-INVITE sent by ANumber may include an accepted payload identifier cY and one or more additional payload identifiers that ANumber supports, d1, d2 ... dn. The accepted payload identifier can be mapped to bY without causing any issues, while d1, d2 ... dn may be mapped to new payload identifiers (labelled with e rather than d). Thus, the set bY, e1, e2 ... en may serve as a seventh set of payload identifiers.

In generalised terms, the sixth set of one or more payload identifiers may comprises a previously-negotiated (e.g. negotiated in the process described with reference to Figure 2) payload identifier (e.g. cY) and one or more further payload identifiers (e.g. , d1, d2 ... dn). Determining the seventh set of one or more payload identifiers may comprise replacing the previously-negotiated payload identifier based on the mapping between the second and third sets of one or more payload identifiers. For example, because cY has been negotiated previously and a mapping has already been established between cY and bY, cY in the message can safely be mapped to bY. The seventh set of one or more payload identifiers preferably does not contain any payload identifier from the one or more further payload identifiers. More strictly, the seventh set may be chosen such that the members of the seventh set do not contain any payload identifier from the previously-described sets a, b, or c.

That is, in a similar fashion to the above discussion of Figure 2, the AS may select new e rtpmaps in a way such that:
e ∉ {a1,a2,..aN,b1,b2,...bN,c1,c2,...,cN}

In this list, cY and bY should be absent, as there is already a 1 to 1 map that can be used for this iteration. When a new codec is selected, that outdated associated may be removed.

This method may be used for every re-INVITE sent by either party, but a problem can be encountered: the dynamic range of rtpmap is a scarce resource (from 96 to 127), so it is possible to run out of options in this range. In this case, a solution may be always to maintain the last codec selected and the reserved types, so that in the worst case scenario, it will be possible maintain the quality of the call or switch to a fixed new codec.

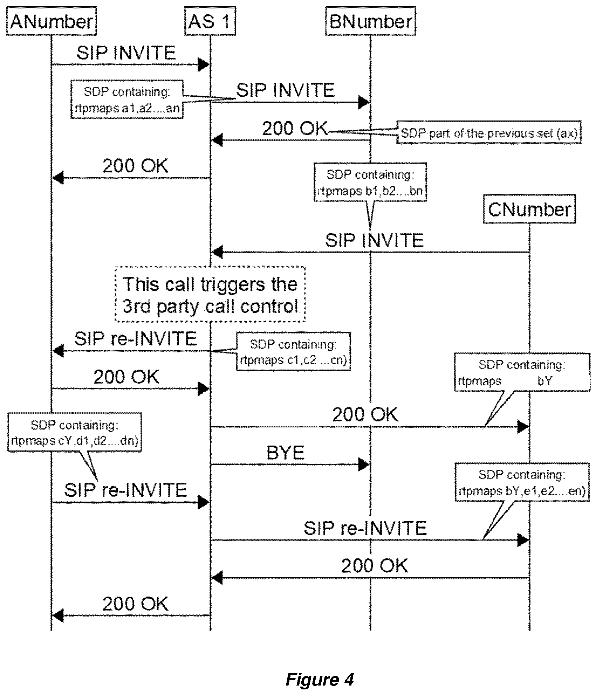

The full flow diagram of the above-described sequence is shown in Figure 4 for reference and a worked example of embodiments of the disclosure is now provided

The exemplary scenario described in the background section could similarly have an initial set of rtpmaps and ftpmaps, defined in a SIP offer to a first called device (such as a SIP INVITE to BNumber with SDP containing rtpmaps a1, a2, ..., aN, as shown in Figure 2) as follows:
a=rtpmap:96 AMR/8000/1
a=fmtp:96 max-red=220; mode-change-capability=2; octet-align=1
a=rtpmap:97 telephone-event/16000
a=fmtp:97 0-15

In this case, a1=96 and a2=97, which defines a first set of payload identifiers. It should be noted that the offer can contain more codecs in the dynamic rtpmap range, but there are two in this example.

The second INVITE (e.g. an INVITE from CNumber, as shown in Figure 2) that is received by the AS can look like this:
a=rtpmap:96 AMR/8000/1
a=fmtp:96 max-red=220; mode-change-capability=2; octet-align=1
a=rtpmap:97 AMR-WB/16000/1
a=fmtp:97 max-red=220; mode-change-capability=2
a=rtpmap:111 telephone-event/16000
a=fmtp:111 0-15

In this case, b1=96, b2=97 and b3=111, which define a second set of payload identifiers. The AS cannot maintain the rtpamp because it has been already set by the original A party, so the rtpmap is modified in the present solution. The INVITE sent by the AS is based on new rtpmaps that do not overlap with the existing ones:
a=rtpmap:98 AMR/8000/1
a=fmtp:98 max-red=220; mode-change-capability=2; octet-align=1
a=rtpmap:99 AMR-WB/16000/1
a=fmtp:99 max-red=220; mode-change-capability=2
a=rtpmap:100 telephone-event/16000
a=fmtp:100 0-15

So, in this case, c1=98, c2=99 and c3=100, which defines a third set of payload identifiers.

In response to this third SIP message, the answer from A party can be, for example:
a=rtpmap:98 AMR/8000/1
a=fmtp:98 max-red=220; mode-change-capability=2; octet-align=1

That would make the cY=c2=99. However, the answer should not be sent to BNumber in this form, so in preferred embodiments, the AS is aware that cY corresponds to the bY=b1=97 because the b rtpmaps are for an answer.

Thus, it can be seen the embodiments of the disclosure can ensure reliability of communication sessions when a call made by a calling device is picked up by a second called device that is not the original intended recipient of the call.

It will be understood that many variations may be made to the above apparatus, systems and methods whilst retaining the advantages noted previously. For example, where specific components have been described, alternative components can be provided that provide the same or similar functionality.

The disclosure has been described by reference to sets of payload identifiers. It will be recognised that any set may contain, one, two, or more than two elements. Thus, a set may contain a single element or a plurality of elements.

Any rtpmaps can be used in embodiments of the disclosure. For example, a video upgrade may be provided. A non-exhaustive list of potential rtpmaps that can be used in the present disclosure is: H263-1998; H263-2000; H264 AVC; H264 SVC; H265; theora; iLBC; PCMA-WB; PCMU-WB; G718; G719; G7221; G726-16; G726-24; G726-32; G726-40; G729D; G729E; G7291; GSM-EFR; GSM-HR-08; AMR; AMR-WB; AMR-WB+; vorbis; opus; speex; mpa-robust; MP4A-LATM; MP4V-ES; mpeg4-generic; VP8; VP9; L8; DAT12; L16; L20; L24; raw; ac3; eac3; t140; EVRC; EVRCB; EVRCWB; jpeg2000; UEMCLIP; ATRAC3; ATRAC-X; ATRAC-ADVANCED-LOSSLESS; DV; BT656; BMPEG; SMPTE292M; RED; VDVI; MP1S; MP2P; tone; telephone-event; aptx; and jxsv.

It will be appreciated that embodiments of the present disclosure relate, in a general sense, to methods that involve receiving a fourth SIP message, which may originate from the calling device and be addressed to the second called device or which may originate from the second called device and be addressed to the calling device. In either case, the fourth SIP message may comprise a fourth set of one or more payload identifiers and the method may further comprise: determining a fifth set of one or more payload identifiers based on: the fourth set of one or more payload identifiers; and the mapping between the second and third sets of one or more payload identifiers; and sending, to the called device or the second called device, a fifth SIP message, the fifth SIP message comprising the fifth set of one or more payload identifiers. As will be apparent from the present disclosure, this functionality can be performed in different contexts. In particular, this functionality can be the step performed when the AS 1 in Figure 2 receives a 200 OK message (a fourth SIP message) from ANumber and sends a 200 OK message (a fifth SIP message) to CNumber. However, this functionality can also be performed when the AS 1 in Figure 3 receives a SIP re-INVITE from the ANumber, although the precise details will of course differ between these different scenarios.

It should be noted that in the foregoing description of Figure 3, the steps are described by referring to sixth and seventh SIP messages. However, it will be recognised that "sixth" and "seventh" are simply labels and could be replaced by "fourth" and "fifth" when describing the steps performed in Figure 3 in isolation from the steps performed in Figure 2. The labels "sixth" and "seventh" are simply used to avoid confusing the steps performed in Figure 3 with the steps performed in Figure 2. The steps performed in Figures 2 and 3 can of course be combined, as shown in Figure 4, and can be repeated as many times as needed during a communication session.

The above-mentioned functionality may be implemented as one or more corresponding modules as hardware (e.g. in a server) and/or software (e.g. as a logical part of existing hardware). For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements.

It will be appreciated that, insofar as embodiments of the disclosure are implemented by a computer program, then a storage medium and a transmission medium carrying the computer program form aspects of the disclosure. The computer program may have one or more program instructions, or program code, that, when executed by a computer, causes an embodiment of the disclosure to be carried out. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

Each feature disclosed in this specification, unless stated otherwise, may be replaced by alternative features serving the same, equivalent or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and, where the context allows, vice versa. For instance, unless the context indicates otherwise, a singular reference herein including in the claims, such as "a" or "an" (such as a SIP message or a payload identifier) means "one or more" (for instance, one or more SIP messages, or one or more payload identifiers). Throughout the description and claims of this disclosure, the words "comprise", "including", "having" and "contain" and variations of the words, for example "comprising" and "comprises" or similar, mean that the described feature includes the additional features that follow, and are not intended to (and do not) exclude the presence of other components.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

Any steps described in this specification may be performed in any order or simultaneously unless stated or the context requires otherwise. Moreover, where a step is described as being performed after a step, this does not preclude intervening steps being performed.

All of the aspects and/or features disclosed in this specification may be combined in any combination, except combinations where at least some of such features and/or steps are mutually exclusive. In particular, the preferred features of the disclosure are applicable to all aspects and embodiments of the disclosure and may be used in any combination. Likewise, features described in non-essential combinations may be used separately (not in combination).

## Claims

1. A method performed by a network entity of a telecommunications network, the method comprising:
receiving a first session initiation protocol, SIP, message originating from a calling device and addressed to a first called device, the first called device being in a call forwarding group or a call pickup group, the first SIP message comprising a first set of one or more payload identifiers;
receiving a second SIP message originating from a second called device and addressed to the calling device, the second called device being in the same call forwarding group or call pickup group as the first called device, the second SIP message comprising a second set of one or more payload identifiers;
determining a third set of one or more payload identifiers based on at least one of the first set of one or more payload identifiers and the second set of one or more payload identifiers; and
sending, to the calling device, a third SIP message, the third SIP message comprising the third set of one or more payload identifiers.

2. The method of claim 1,
wherein the third set of one or more payload identifiers:
is independent of the first set of one or more payload identifiers and the second set of one or more payload identifiers and/or different to at least one of the first set of one or more payload identifiers and the second set of one or more payload identifiers; and/or
does not comprise any payload identifier from the first set of payload identifiers and/or the second set of payload identifiers.

3. The method of any preceding claim, wherein sending the third SIP message comprises determining the third set of one or more payload identifiers by modifying the second set of one or more payload identifiers of the second SIP message.

4. The method of any preceding claim, wherein:
each set of one or more payload identifiers is stored in a session description protocol, SDP, message associated with a respective SIP message; and/or
each set of one or more payload identifiers comprises one or more rtpmap attributes and/or or more fmtp attributes.

5. The method of any preceding claim, comprising:
determining a mapping between the second and third sets of one or more payload identifiers; and
storing the mapping between the second and third sets of one or more payload identifiers.

6. The method of claim 5, comprising:
receiving a fourth SIP message comprising a fourth set of one or more payload identifiers;
determining a fifth set of one or more payload identifiers based on: the fourth set of one or more payload identifiers; and the mapping between the second and third sets of one or more payload identifiers; and
sending, to the calling device or the second called device, a fifth SIP message, the fifth SIP message comprising the fifth set of one or more payload identifiers.

7. The method of claim 6, wherein the fourth set of one or more payload identifiers comprises a previously-negotiated payload identifier and one or more further payload identifiers.

8. The method of any preceding claim, wherein the first SIP message is a SIP offer message and/or wherein the second SIP message is a SIP offer message.

9. The method of any preceding claim, wherein at least one set of one or more payload identifiers comprises a plurality of payload identifiers.

10. The method of any preceding claim, comprising:
identifying that the first and/or second set of one or more payload identifiers indicates a dynamic payload type; and
sending the third SIP message in response to identifying that the first and/or second set of one or more payload identifiers indicates a dynamic payload type.

11. The method of any preceding claim, comprising:
identifying that the first called device and the second called device are in a call pickup group and/or a call forwarding group; and
sending the third SIP message in response to identifying that the first called device and the second called device are in a call pickup group and/or a call forwarding group.

12. The method of any preceding claim, wherein the network entity is an application server, AS, a session border controller, SBC, or a back-to-back user agent, B2BUA.

13. A computer program comprising instructions that, when the computer program is executed by a network entity of a telecommunications network, cause the network entity to carry out the method of any preceding claim.

14. A network entity configured to perform the method of any of claims 1 to 12.

15. A telecommunications network comprising one or more network entities according to claim 14.

## Patentansprüche

1. Verfahren, das von einer Netzwerkeinheit eines Telekommunikationsnetzwerks durchgeführt wird, wobei das Verfahren umfasst:
Empfangen einer ersten Sitzungseinleitungsprotokollnachricht (Session Initiation Protocol, SIP-Nachricht), die von einer anrufenden Vorrichtung stammt und an eine erste angerufene Vorrichtung gerichtet ist, wobei die erste angerufene Vorrichtung sich in einer Anrufweiterleitungsgruppe oder einer Anrufannahmegruppe befindet, wobei die erste SIP-Nachricht einen ersten Satz einer oder mehrerer Nutzlastkennungen umfasst;
Empfangen einer zweiten SIP-Nachricht, die von einer zweiten angerufenen Vorrichtung stammt und an die anrufende Vorrichtung gerichtet ist, wobei sich die zweite angerufene Vorrichtung in derselben Anrufweiterleitungsgruppe oder Anrufannahmegruppe wie die erste angerufene Vorrichtung befindet, wobei die zweite SIP-Nachricht einen zweiten Satz einer oder mehrerer Nutzlastkennungen umfasst;
Bestimmen eines dritten Satzes einer oder mehrerer Nutzlastkennungen auf Basis von mindestens einem des ersten Satzes einer oder mehrerer Nutzlastkennungen und des zweiten Satzes einer oder mehrerer Nutzlastkennungen; und
Senden, an die anrufende Vorrichtung, einer dritten SIP-Nachricht, wobei die dritte SIP-Nachricht den dritten Satz einer oder mehrerer Nutzlastkennungen umfasst.

2. Verfahren nach Anspruch 1,
wobei der dritte Satz einer oder mehrerer Nutzlastkennungen:
unabhängig von dem ersten Satz einer oder mehrerer Nutzlastkennungen und dem zweiten Satz einer oder mehrerer Nutzlastkennungen ist und/oder sich mindestens von einem des ersten Satzes einer oder mehrerer Nutzlastkennungen und des zweiten Satzes einer oder mehrerer Nutzlastkennungen unterscheidet; und/oder
keine Nutzlastkennung aus dem ersten Satz von Nutzlastkennungen und/oder dem zweiten Satz von Nutzlastkennungen umfasst.

3. Verfahren nach einem vorstehenden Anspruch, wobei das Senden der dritten SIP-Nachricht das Bestimmen des dritten Satzes einer oder mehrerer Nutzlastkennungen umfasst, indem der zweite Satz einer oder mehrerer Nutzlastkennungen der zweiten SIP-Nachricht geändert wird.

4. Verfahren nach einem vorstehenden Anspruch, wobei:
jeder Satz einer oder mehrerer Nutzlastkennungen in einer Sitzungsbeschreibungsprotokollnachricht (Session Description Protocol, SDP-Nachricht) gespeichert ist, die einer jeweiligen SIP-Nachricht zugeordnet ist; und/oder
jeder Satz einer oder mehrerer Nutzlastkennungen eines oder mehrere rtpmap-Attribute und/oder eines oder mehrere fmtp-Attribute umfasst.

5. Verfahren nach einem vorstehenden Anspruch, umfassend:
Bestimmen einer Zuordnung zwischen dem zweiten und dem dritten Satz einer oder mehrerer Nutzlastkennungen; und
Speichern der Zuordnung zwischen dem zweiten und dem dritten Satz einer oder mehrerer Nutzlastkennungen.

6. Verfahren nach Anspruch 5, umfassend:
Empfangen einer vierten SIP-Nachricht umfassend einen vierten Satz einer oder mehrerer Nutzlastkennungen;
Bestimmen eines fünften Satzes einer oder mehrerer Nutzlastkennungen auf Basis: des vierten Satzes einer oder mehrerer Nutzlastkennungen; und der Zuordnung zwischen dem zweiten und dem dritten Satz einer oder mehrerer Nutzlastkennungen; und
Senden, an die anrufende Vorrichtung oder die zweite angerufene Vorrichtung, einer fünften SIP-Nachricht, wobei die fünfte SIP-Nachricht den fünften Satz einer oder mehrerer Nutzlastkennungen umfasst.

7. Verfahren nach Anspruch 6, wobei der vierte Satz einer oder mehrerer Nutzlastkennungen eine zuvor ausgehandelte Nutzlastkennung und eine oder mehrere weitere Nutzlastkennungen umfasst.

8. Verfahren nach einem vorstehenden Anspruch, wobei es sich bei der ersten SIP-Nachricht um eine SIP-Angebotsnachricht handelt und/oder wobei es sich bei der zweiten SIP-Nachricht um eine SIP-Angebotsnachricht handelt.

9. Verfahren nach einem vorstehenden Anspruch, wobei der mindestens eine Satz einer oder mehrerer Nutzlastkennungen eine Vielzahl an Nutzlastkennungen umfasst.

10. Verfahren nach einem vorstehenden Anspruch, umfassend:
Identifizieren, dass der erste und/oder zweite Satz einer oder mehrerer Nutzlastkennungen einen dynamischen Nutzlasttyp angibt; und
Senden der dritten SIP-Nachricht infolge des Identifizierens, dass der erste und/oder zweite Satz einer oder mehrerer Nutzlastkennungen einen dynamischen Nutzlasttyp angibt.

11. Verfahren nach einem vorstehenden Anspruch, umfassend:
Identifizieren, dass sich die erste angerufene Vorrichtung und die zweite angerufene Vorrichtung in einer Anrufannahmegruppe und/oder einer Anrufweiterleitungsgruppe befinden; und
Senden der dritten SIP-Nachricht infolge des Identifizierens, dass sich die erste angerufene Vorrichtung und die zweite angerufene Vorrichtung in einer Anrufannahmegruppe und/oder einer Anrufweiterleitungsgruppe befinden.

12. Verfahren nach einem vorstehenden Anspruch, wobei es sich bei der Netzwerkeinheit um einen Anwendungsserver (Application Server, AS), einen Session Border Controller (SBC) oder einen Back-to-Back-Benutzeragenten (Back-to-Back User Agent, B2BUA) handelt.

13. Computerprogramm umfassend Anweisungen, die bei Ausführung des Computerprogramms durch eine Netzwerkeinheit eines Telekommunikationsnetzwerks veranlassen, dass die Netzwerkeinheit das Verfahren nach einem vorstehenden Anspruch ausführt.

14. Netzwerkeinheit, konfiguriert zum Durchführen des Verfahrens nach einem der Ansprüche 1 bis 12.

15. Telekommunikationsnetzwerk, umfassend eine oder mehrere Netzwerkeinheiten nach Anspruch 14.

## Revendications

1. Procédé réalisé par une entité de réseau d'un réseau de télécommunications, le procédé comprenant :
la réception d'un premier message de protocole d'initiation de session, SIP, provenant d'un dispositif appelant et adressé à un premier dispositif appelé, le premier dispositif appelé étant dans un groupe de transfert d'appel ou un groupe de prise d'appel, le premier message SIP comprenant un premier ensemble d'un ou de plusieurs identifiants de données utiles ;
la réception d'un deuxième message SIP provenant d'un deuxième dispositif appelé et adressé au dispositif appelant, le deuxième dispositif appelé étant dans le même groupe de transfert d'appel ou groupe de prise d'appel que le premier dispositif appelé, le deuxième message SIP comprenant un deuxième ensemble d'un ou de plusieurs identifiants de données utiles ;
la détermination d'un troisième ensemble d'un ou de plusieurs identifiants de données utiles sur la base d'au moins l'un parmi le premier ensemble d'un ou de plusieurs identifiants de données utiles et le deuxième ensemble d'un ou de plusieurs identifiants de données utiles ; et
l'envoi, au dispositif appelant, d'un troisième message SIP, le troisième message SIP comprenant le troisième ensemble d'un ou de plusieurs identifiants de données utiles.

2. Procédé selon la revendication 1,
dans lequel le troisième ensemble d'un ou de plusieurs identifiants de données utiles :
est indépendant du premier ensemble d'un ou de plusieurs identifiants de données utiles et du deuxième ensemble d'un ou de plusieurs identifiants de données utiles et/ou différent d'au moins l'un parmi le premier ensemble d'un ou de plusieurs identifiants de données utiles et le deuxième ensemble d'un ou de plusieurs identifiants de données utiles ; et/ou
ne comprend aucun identifiant de données utiles issu du premier ensemble d'identifiants de données utiles et/ou du deuxième ensemble d'identifiants de données utiles.

3. Procédé selon l'une quelconque des revendications précédentes, dans lequel l'envoi du troisième message SIP comprend la détermination du troisième ensemble d'un ou de plusieurs identifiants de données utiles par modification du deuxième ensemble d'un ou de plusieurs identifiants de données utiles du deuxième message SIP.

4. Procédé selon l'une quelconque des revendications précédentes, dans lequel :
chaque ensemble d'un ou de plusieurs identifiants de données utiles est stocké dans un message de protocole de description de session, SDP, associé à un message SIP respectif ; et/ou
chaque ensemble d'un ou de plusieurs identifiants de données utiles comprend un ou plusieurs attributs rtpmap et/ou un ou plusieurs attributs fmtp.

5. Procédé selon l'une quelconque des revendications précédentes, comprenant :
la détermination d'un mappage entre les deuxième et troisième ensembles d'un ou de plusieurs identifiants de données utiles ; et
le stockage du mappage entre les deuxième et troisième ensembles d'un ou de plusieurs identifiants de données utiles.

6. Procédé selon la revendication 5, comprenant :
la réception d'un quatrième message SIP comprenant un quatrième ensemble d'un ou de plusieurs identifiants de données utiles ;
la détermination d'un cinquième ensemble d'un ou de plusieurs identifiants de données utiles sur la base : du quatrième ensemble d'un ou de plusieurs identifiants de données utiles ; et du mappage entre les deuxième et troisième ensembles d'un ou de plusieurs identifiants de données utiles ; et
l'envoi, au dispositif appelant ou au deuxième dispositif appelé, d'un cinquième message SIP, le cinquième message SIP comprenant le cinquième ensemble d'un ou de plusieurs identifiants de données utiles.

7. Procédé selon la revendication 6, dans lequel le quatrième ensemble d'un ou de plusieurs identifiants de données utiles comprend un identifiant de données utiles précédemment négocié et un ou plusieurs autres identifiants de données utiles.

8. Procédé selon l'une quelconque des revendications précédentes, dans lequel le premier message SIP est un message d'offre SIP et/ou dans lequel le deuxième message SIP est un message d'offre SIP.

9. Procédé selon l'une quelconque des revendications précédentes, dans lequel au moins un ensemble d'un ou de plusieurs identifiants de données utiles comprend une pluralité d'identifiants de données utiles.

10. Procédé selon l'une quelconque des revendications précédentes, comprenant :
l'identification du fait que le premier et/ou le deuxième ensemble d'un ou de plusieurs identifiants de données utiles indiquent un type de données utiles dynamique ; et
l'envoi du troisième message SIP en réponse à l'identification du fait que le premier et/ou le deuxième ensemble d'un ou de plusieurs identifiants de données utiles indiquent un type de données utiles dynamique.

11. Procédé selon l'une quelconque des revendications précédentes, comprenant :
l'identification du fait que le premier dispositif appelé et le deuxième dispositif appelé sont dans un groupe de prise d'appel et/ou un groupe de transfert d'appel ; et
l'envoi du troisième message SIP en réponse à l'identification du fait que le premier dispositif appelé et le deuxième dispositif appelé sont dans un groupe de prise d'appel et/ou un groupe de transfert d'appel.

12. Procédé selon l'une quelconque des revendications précédentes, dans lequel l'entité de réseau est un serveur d'application, AS, un contrôleur de session en périphérie, SBC, ou un agent utilisateur dos à dos, B2BUA.

13. Programme d'ordinateur comprenant des instructions qui, lorsque le programme d'ordinateur est exécuté par une entité de réseau d'un réseau de télécommunications, amènent l'entité de réseau à effectuer le procédé de l'une quelconque des revendications précédentes.

14. Entité de réseau configurée pour réaliser le procédé de l'une quelconque des revendications 1 à 12.

15. Réseau de télécommunications comprenant une ou plusieurs entités de réseau selon la revendication 14.
